(19) Europäisches Patentamt
European Patent Office
Office européen des brevets

(11) EP 2 938 753 B1

(12) # EUROPEAN PATENT SPECIFICATION

(45) Date of publication and mention of the grant of the patent:
**27.02.2019 Bulletin 2019/09**

(21) Application number: **13811546.4**

(22) Date of filing: **20.12.2013**

(51) Int Cl.:
***C23C 18/12*** *(2006.01)*

(86) International application number:
**PCT/EP2013/077574**

(87) International publication number:
**WO 2014/102166 (03.07.2014 Gazette 2014/27)**

(54) **A COATING COMPOSITION, A PREPARATION METHOD THEREFORE, AND USE THEREOF**

BESCHICHTUNGSZUSAMMENSETZUNG, HERSTELLUNGSVERFAHREN UND VERWENDUNG

COMPOSITION DE REVÊTEMENT, SON PROCÉDÉ DE PRÉPARATION ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2012 PCT/CN2012/087418**

(43) Date of publication of application:
**04.11.2015 Bulletin 2015/45**

(73) Proprietor: **Akzo Nobel Coatings International B.V.**
**6824 BM Arnhem (NL)**

(72) Inventor: **LU, Junbiao**
**Shanghai 201600 (CN)**

(74) Representative: **Akzo Nobel IP Department**
**Velperweg 76**
**6824 BM Arnhem (NL)**

(56) References cited:
**WO-A1-2005/003218**
**WO-A2-2004/005577**
**WO-A2-2005/066388**
**CN-A- 102 070 987**
**DE-A1- 19 714 949**
**US-A- 5 755 867**
**US-A1- 2006 145 306**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

This invention relates to compositions used for forming a glass-like coating on substrates, by hydrolysis and condensation reactions of organoalkoxysilanes, as well as the preparation method and use thereof.

### Background

The sol-gel process is a wet-chemical technique used for the fabrication of both glassy and ceramic materials. In this process, the sol (or solution) evolves gradually towards the formation of a gel-like network containing both a liquid phase and a solid phase. Alkoxysilanes are ideal chemical precursors for sol-gel synthesis because they react readily with water. The reaction is called hydrolysis, because a hydroxyl moiety becomes attached to the silicon atom as follows:

$$Si(OR)_4 + H_2O \rightarrow HO\text{-}Si(OR)_3 + R\text{-}OH$$

Depending on the amount of water and catalyst present, hydrolysis may proceed to completion, so that all of the OR groups are replaced by OH groups, as follows:

$$Si(OR)_4 + 4\ H_2O \rightarrow Si(OH)_4 + 4\ R\text{-}OH$$

Such complete hydrolysis of alkoxysilanes often requires an excess of water and/or the presence of hydrolysis catalysts such as acetic acid or hydrochloric acid, etc. Intermediate species $[(OR)_2\text{-}Si\text{-}(OH)_2]$ or $[(OR)_3\text{-}Si\text{-}(OH)]$ may result from partial hydrolysis reactions. In addition, two partially hydrolyzed molecules can link together in a condensation reaction to form a siloxane [Si-O-Si] bond:

$$(OR)_3\text{-}Si\text{-}OH + HO\text{-}Si\text{-}(OR)_3 \rightarrow [(OR)_3Si\text{-}O\text{-}Si(OR)_3] + H\text{-}O\text{-}H$$

or

$$(OR)_3\text{-}Si\text{-}OR + HO\text{-}Si\text{-}(OR)_3 \rightarrow [(OR)_3Si\text{-}O\text{-}Si(OR)_3] + R\text{-}OH$$

The resulting siloxanes can undergo further hydrolysis and condensation reactions, leading to polymers and the formation of a 1, 2, or 3- dimensional network of siloxane [Si-O-Si] bonds accompanied by the production of H-O-H and R-O-H species.

Based on the above mentioned sol-gel technology, alkoxysilanes have been widely used as the coupling agents in the coatings industry. Recently a new application of alkoxysilanes in coatings has been reported. Herein the alkoxysilanes are used to achieve a good protection of substrate. These applications mainly focused on the hybridization of organic materials with inorganic materials.

GB 2444053 A disclosed Hybrid UV-curable resins based on a silane with UV curable functionality groups and UV curable resin. High hardness and good adhesion of the resulting coating were reported but the compatibility of the Hybrid UV-curable resins with traditional resins and the appearance of final products still need to be improved.

CN 102241939 A disclosed that the polymerization of hydrolyzed silanes resulted in very hard coating with anti-fog performance, however the absence of functional groups on the silanes decreases the adhesion of the final product to the substrate, and the uniformity and appearance of the resulting coating was imperfect.

IN620/DEL/2010 disclosed an improved composition for coating metallic surfaces by hydrolyzing and condensing methyltriethoxysilane (MTES) and tertraethoxysilane (TEOS) at a long reaction time and finally curing at a high temperature. US 2010/0143600 A1 also disclosed that silicon oxide oligomer resulting from MTES and TEOS may generate a hard coating (above 8H on glass). In both references the methyl group of silane acts as the organic moiety during the hybridization. The commercial value of both the patents is quite limited due to the necessary high curing temperature and because a poor adhesion of the coating to the substrate has been observed.

Therefore a novel sol-gel coating is desired wherein a hybrid coating is obtained which is uniform, especially at nanoscopic level.

### Description of the Invention

The present invention provides for a coating composition that is capable of forming a coating with high hardness, high scratch resistance, good thermal impact resistance, inertia to acid and stains, UV transparency and excellent

adhesion to substrates such as metal and glass, as well as the preparation method and use thereof.

According to one aspect of the present invention, a two-component (2K) coating composition is provided. The coating composition comprises:

A first component containing:

- A mixture of silanes having formula (I)

$$R^1_n\text{-Si-}(OR^2)_{4-n} \qquad (I)$$

  wherein, $R^1$ is selected from substituted and unsubstituted alkyl, and substituted and unsubstituted cycloalkyl, substituted and unsubstituted heterocycloalkyl, substituted and unsubstituted aryl, substituted and unsubstituted heteroaryl, substituted and unsubstituted alkylthio, substituted and unsubstituted alkylamino, substituted and unsubstituted perfluoroalkyl, and substituted and unsubstituted alkyl halide, preferably $R^1$ is selected from substituted and unsubstituted alkyl, and substituted and unsubstituted cycloalkyl, substituted and unsubstituted heterocycloalkyl, wherein the substituted alkyl and cycloalkyl are preferably substituted with one or more acryloyl groups, methacryloyl groups, vinyl ether groups, or vinyl ester groups; whereby $R^1$ is having 1-15 carbon atoms, preferably having 1-8 carbon atoms, and more preferably having 1-5 carbon atoms, $R^2$ is $C_1$ - $C_3$ alkyl, n=0-4, and n, on average, is not greater than 1, preferably not greater than 0.90, more preferably not greater than 0.85, and even more preferably not greater than 0.80, and meanwhile, n, on average, is not less than 0.54, preferably not less than 0.60, more preferably not less than 0.65, and even more preferably not less than 0.70,
- one or more optional solvents selected from methanol, ethanol, n-propanol, isopropanol, iso-butanol, ethylene glycol butyl ether, and
- one or more optional additives selected from stabilizers, colorants, dyes, pigments, rheology modifiers.

A second component containing:

- an aqueous dispersion of functionalized nano-particles whereof the functional groups are capable of condensing with hydroxyl groups of one or more of the silanes in the first component,
- an optional inorganic and/or organic acid or base catalyst,
- one or more optional solvents, and
- one or more optional additives.

The amount of the first component is not less than 7 percent by weight (wt%), preferably not less than 20wt%, and more preferably not less than 30wt%, based on the total weight of the composition, and meanwhile, the amount of the first component is not greater than 70wt%, preferably not greater than 65wt%, and more preferably not greater than 61wt%, based on the total weight of the composition;

The amount of the second component is not less than 30wt%, preferably not less than 35wt%, and more preferably not less than 39wt%, based on the total weight of the composition, and meanwhile, the amount of the second component is not greater than 93wt%, preferably not greater than 80wt%, and more preferably not greater than 70wt%, based on the total weight of the composition. The total of the first and second components is 100wt%.

As used herein, the term "2K coating" means a two-component coating product that is in the form of two separate components which usually need to be mixed right before application of the coating. The term is relative to "1K coating" which means a coating that only includes a single component. Specifically, the 2K coating composition according to the present invention is provided in the form of two separate components, i.e., said first and second components are not mixed together until application of the composition. In this way a desirable long shelf life of the coating composition can be combined with a high curing rate, as will be further discussed in detail below.

The aqueous dispersion of functionalized nano-particles suitable for use in the present invention is typically selected from, but not limited to, silicon dioxide in water dispersion system, titanium dioxide in water dispersion system, or a mixture thereof. The concentration or solid content of such dispersion can be varied depending on the specific material used in the dispersion. For example, in the case of an aqueous dispersion of nano-particles of silicon dioxide, the solid content of the dispersion is normally not greater than 80wt% based on the total weight of the dispersion; in the case of an aqueous dispersion of nano-particles of titanium dioxide, the solid content of the dispersion is normally not greater than 60wt% based on the total weight of the dispersion; and accordingly, in the case of an aqueous dispersion of mixed nano-particles of silicon dioxide and titanium dioxide, the upper limit of solid content of the dispersion is normally between 30wt% and 50wt% based on the total weight of the dispersion. In addition, one of ordinary skill in the art would understand that such an aqueous dispersion may also contain additional additives such as acids or bases, to maintain a stable dispersion system.

The chemistry of the coating composition is based on the hydrolysis and condensation reactions of a mixture

of organoalkoxysilanes and alkoxysilanes. The hydrolysis of organoalkoxysilanes and alkoxysilanes is a spontaneous reaction. When in the presence of excess of water and catalyst if necessary, the alkoxy groups of organoalkoxysilanes and alkoxysilanes tend to be replaced by hydroxyl groups. Accordingly, silanols are obtained after hydrolysis. The free hydroxyl functionality groups on the obtained silanols are very reactive and capable of condensation even at low temperature. This is because de-hydration between two hydroxyl groups forms a firm siloxane bond (-Si-O-Si-). In the present invention, water existing in the aqueous dispersion of functionalized nano-particles is normally enough for conducting the hydrolysis reaction, and in this case, it is unnecessary to add additional water into the composition. If the aqueous dispersion does not contain enough water for conducting the hydrolysis reaction, however, additional water will be required to be added into the second component of the composition. In this case, one of ordinary skill in the art would understand that the amount of the additional water required can be readily determined according to the amount of organoalkoxysilanes and alkoxysilanes contained in the first component of the composition.

According to the present invention, one of the important measures taken for such technology was found to be the reaction control of the raw materials and intermediates. It is preferred that the hydrolysis is quick and as complete as possible in the system, and the condensation reaction is held up until actual application of the coating composition. In other words, the ingredients of the first component of the coating composition, i.e., the alkoxysilanes, are preferably selected to allow an a quick and complete hydrolysis once in contact with water, while they preferably do not condense with each other before the hydrolysis is complete. In this way, the 2K composition remains stable when it is stored and not in use, shows a quick and efficient hydrolysis and subsequent condensation when the first and second components of the composition are mixed together. Further, preferably raw materials are used for making the inorganic and organic hybrid coating, which are commercially available, such as organofunctional alkoxysilanes and/or (non-functional) alkoxysilanes, which are widely used as coupling agents in fiber-reinforced polymers.

The hydrolysis may be catalyzed by inorganic acids or organic acids, or bases. Said inorganic acid include, for example, HCl, $H_2SO_4$, $H_3PO_4$, $HNO_3$, etc. Said organic acids include, for example, formic acid, acetic acid, benzoic acid, lactic acid, alginic acid, citric acid, malic acid, succinic acid, tartaric acid. Said bases include, for example, NaOH, KOH, and ammonia. The condensation may be accelerated by many factors like the catalysts listed above, increased temperature, etc.

It has been found that the coating compositions of the present invention are particularly suitable to provide a coating with a high crosslink density. To achieve such an effect of the average degree of functionality of the silanes, that is the average number of hydrolysable OR groups per silane molecule, is to be selected properly. For example, in the case of tetra-alkoxysilane having four hydrolysable OR groups, it forms four Si-OH groups upon complete hydrolysis, and allows formation of a firm 3-dimensional network of siloxane [-Si-O-Si-] moieties upon condensation. In the case of an alkoxysilane having two or less hydrolysable OR groups, it forms two or less Si-OH groups per molecule upon hydrolysis, and forms only a chain of siloxanes of the form $-O-[-Si-O-]_n-Si-$ bonds upon condensation. Thus the crosslink density of the resulting product is correlated to the degree of functionality of silane, the higher the degree of functionality of the silane, the higher will be the crosslink density of the relevant formed coating under the same curing condition.

Many properties of a coating, such as stain resistance and scratch resistance, were found to show a relation to the crosslink density of the coating. Generally, a higher degree of crosslink density led to good stain resistance, scratch resistance, wear resistance, etc., while a lower degree crosslink density resulted in a higher flexibility. It was also found that higher crosslink density implies smaller free volume room for organic groups which are attached to silicon atoms. Therefore, crosslink density must be balanced carefully because too high crosslink density leads to low flexibility.

The 2K systems of the current invention were found to provide a very useful platform from where coating compositions with different performances can be prepared, for example by fine-tuning the degree of functionality of the silanes to control the crosslink density of resulting coating. According to the present invention, the effective degree of functionality of silanes is adjusted and fine-tuned, based on the desired properties of the coating. Specifically, different silanes with varied hydrolysable OR group numbers are mixed together, so that the silanes are capable of forming a firm 3- dimensional network of siloxane [-Si-O-Si-] bonds which provides desired performances such as scratch resistance, flexibility, hardness, etc., while cracks do not occur in the resulting coating.

More specifically, in the case that the composition of the present invention contains an admixture of silanes, each with a different number of hydrolysable OR group numbers, the average degree of functionality is calculated in the usual way, which is elucidated by the following generic formula for the silanes A, B and C:

$$\bar{f} = \frac{n_A f_A + n_C f_C + n_B f_B}{n_A + n_B + n_C}$$

where n is the molar amount and f is the number of OR groups per molecule of each silane A, B and C.

In one of the embodiments of the present invention, the mixture of silanes of formula (I) has an average degree of functionality (or number of OR groups) of from 3 till 3.46 per one silicon, i.e., the effective degree of functionality of

silanes is within the range of 3-3.46. Specifically, the effective degree of functionality of silanes is not less than 3, preferably not less than 3.1, more preferably not less than 3.15, and most preferably not less than 3.20; meanwhile, the effective degree of functionality of silanes is not greater than 3.46, preferably not greater than 3.40, more preferably not greater than 3.35, and most preferably not greater than 3.30. Within the preferred ranges of effective degree of functionality, the resulting coating was found to exhibit excellent scratch resistance and other properties.

In the coating composition of the present invention, nano-particles functionalized with functional groups that are capable of condensing with hydroxyl groups were found to play a very important role during the coating formation. The interface between these nano-particles and the matrix of the coating composition of the invention (mainly consisting of cross-linked silanes), was found to create a very good pathway for the diffusion of water and alcohol molecules out of the composition during the curing process, resulting in a decreased number of voids in the cured coating. Accordingly, a high quality of resulting coating was obtained. The nano-particles are functionalized by groups capable of condensing with hydroxyl groups because they need to become bonded to the matrix of the coating. This is believed to be one of the reasons that the resulting coatings of the invention have such a good scratch resistance.

In one of the embodiments of the present invention, the nano-particles used in the composition of the present invention are nano-particles functionalized with hydroxyl, carboxyl, amino, epoxy, and/or aldehyde groups. More preferably, the nano-particles are functionalized with hydroxyl group. The nano-particles applicable in the composition of the present invention may be made of materials selected from, for example, silica, alumina, zirconia (zirconium dioxide), zinc oxide and titanium dioxide. In addition, the nano-particles material used in the composition of the present invention is preferably provided in the form of an aqueous dispersion.

As used herein, the term "nano-particles" means ultrafine particles sized no greater than 100 nanometers. Preferably, the particle size of nano-particles used in the present invention is no greater than 50 nanometers, and more preferably, no greater than 30 nanometers. In practice, the particle size can be determined based on particle size distribution measurements conventionally used in the art, such as sieve analysis, air elutriation analysis, optical counting methods, photoanalysis, electro resistance counting methods, sedimentation techniques, acoustic spectroscopy or ultrasound attenuation spectroscopy methods, air pollution emissions measurements, and laser diffraction methods. More specifically, the particle size mentioned above is meant to be the mean particle size D50 as determined by laser diffraction.

According to the present invention, the 2K coating composition is provided as two separate components, wherein the first component is not mixed with the second component until application of the 2K coating composition. This helps prevent the two components from reacting with each other until they are mixed together for application of the coating composition. Specifically, by separating the first component from the second component, the hydrolysis reaction and condensation reaction of the organoalkoxysilanes are prevented from happening. It has been noted that if an early condensation reaction occurs (before application of the composition onto a substrate) then the performance of final obtained coating was decreased. A too long time between hydrolysis and application of the coating composition (the mixture of the two 2K components), will result in gel formation in the solution and result in a bad performance of coating.

In one of the embodiments of the present invention, the operation window for the coating composition is 96 hours, preferably 72 hours, more preferably 48 hours, and most preferably 24 hours after the first and second components are mixed together. Once prepared, the coating composition may be cured quickly, for example in 15 minutes, at a temperature over 50°C, preferably over 100°C, and more preferably over 150°C, but lower than 250°C, preferably lower than 200°C, and more preferably lower than 180 °C.

In one of the embodiments of the present invention, the silanes used in the coating composition are selected from, but not limited to the group consisting of methyltrimethoxysilane, ethyltrimethoxysilane, propyltrimethoxysilane, butyltrimethoxysilane, pentyltrimethoxysilane, hexyltrimethoxysilane, heptyltrimethoxysilane, octyltrimethoxysilane, nonyltrimethoxysilane, decyltrimethoxysilane, methyltriethoxysilane, ethyltriethoxysilane, propyltriethoxysilane, butyltriethoxysilane, pentyltriethoxysilane, hexyltriethoxysilane, heptyltriethoxysilane, octyltriethoxysilane, nonyltriethoxysilane, decyltriethoxysilane, methyltripropoxysilane, ethyltripropoxysilane, propyltripropoxysilane, butyltripropoxysilane, pentyltripropoxysilane, hexyltripropoxysilane, heptyltripropoxysilane, octyltripropoxysilane, nonyltripropoxysilane, decyltripropoxysilane, dimethyldimethoxysilane, diethyldimethoxysilane, dipropyldimethoxysilane, dibutyldimethoxysilane, dipentyldimethoxysilane, dihexyldimethoxysilane, diheptyldimethoxysilane, dioctyldimethoxysilane, dinonyldimethoxysilane, didecyldimethoxysilane, dimethyldiethoxysilane, diethyldiethoxysilane, dipropyldiethoxysilane, dibutyldiethoxysilane, dipentyldiethoxysilane, dihexyldiethoxysilane, diheptyldiethoxysilane, dioctyldiethoxysilane, dinonyldiethoxysilane, didecyldiethoxysilane, dimethyldipropoxysilane, diethyldipropoxysilane, dipropyldipropoxysilane, dibutyldipropoxysilane, dipentyldipropoxysilane, dihexyldipropoxysilane, diheptyldipropoxysilane, dioctyldipropoxysilane, dinonyldipropoxysilane, didecyldipropoxysilane, trimethylmethoxysilane, triethylmethoxysilane, tripropylmethoxysilane, tributylmethoxysilane, tripentylmethoxysilane, trihexylmethoxysilane, triheptylmethoxysilane, trioctylmethoxysilane, trinonylmethoxysilane, tridecylmethoxysilane, trimethylethoxysilane, triethylethoxysilane, tripropylethoxysilane, tributylethoxysilane, tripentylethoxysilane, trihexylethoxysilane, triheptylethoxysilane, trioctylethoxysilane, trinonylethoxysilane, tridecylethoxysilane, trimethylpropoxysilane, triethylpropoxysilane, tripropylpropoxysilane, tributylpropoxysilane, tripentylpropoxysilane, trihexylpropoxysilane, triheptylpropoxysilane, trioctylpropoxysilane, trinonylpropoxysilane, tridecylpropoxysilane, and

tetraethoxysilane.

One or more suitable solvents or diluents may be further added into the coating composition of the present invention. The solvents or diluents may be added into either one or both of the first and the second components of the composition. As the first component is in oil phase, and the second component is in water phase, it can be beneficial and preferred to add solvents or diluents into the composition, such that the two different phases are more easily dispersed when mixed with each other. Accordingly, the contact surface area of the two phases will be larger than it would have been without the addition of solvents or diluents. Hence, by adjusting the amount or presence of solvent, the speed of hydrolysis and condensation can be influenced. Preferably, the solvent or diluents is only added into the second component, so that the hydrolysis and condensation reactions do not occur in the first component. This may result in relatively long shelf life of the resulting 2K composition. In addition, the solvent or diluents can optionally also be added to the coating composition, after mixing the two components, to obtain a dilution of the mixed coating composition with required viscosity and/or concentration. Suitable solvents are selected from methanol, ethanol, n-propanol, isopropanol, iso-butanol, ethylene glycol butyl ether, or a mixture thereof. More preferably, the solvent is selected from ethanol, isopropanol and/or iso-butanol. Most preferably, the solvent is isopropanol.

The acid catalyst applicable for use in the second component of the coating composition of the present invention is selected from, but not limited to, HCl, $H_2SO_4$, $H_3PO_4$, $HNO_3$, formic acid, acetic acid, benzoic acid, lactic acid, alginic acid, citric acid, malic acid, succinic acid, tartaric acid, or a mixture thereof. The base catalyst applicable for use in the second component of the coating composition of the present invention is selected from, but not limited to, NaOH, KOH, and ammonia. Whether an acid catalyst or a base catalyst is suitable for use in the composition depends on the dispersion system that is present in the second component of the coating composition. For example, if the aqueous dispersion of functionalized nano-particles is a dispersion system which is stable within a low pH range such as pH 2-5, then an acid catalyst would be preferred since it does not affect the acidic dispersion system too much, vice versa, for an alkaline dispersion system, a base catalyst would be preferred instead.

It has been found that the amount of catalyst used in the composition influenced the quality of resulting coating greatly. Specifically, if the amount of catalyst is too high, i.e., the resulting reaction rate is too high, hydrolysis and condensation tend to occur very quickly upon mixing the two components of the 2K system, which results in bad performance of resulting coating, such as poor uniformity, hardness, flexibility, etc. If the amount of catalyst is too low, i.e., the resulting reaction rate is too low, then the hydrolysis and condensation tend to occur very slowly, which is not convenient for use, and may also result in bad performance of resulting coating. In order to have the reaction rates of hydrolysis and condensation within a desired range, the amount of catalyst used in the composition of the present invention is finely tuned such that the pH value of the resulting aqueous dispersion of functionalized nano-particles is within a predetermined range.

In one of the embodiments of the present invention, an acid catalyst such as $HNO_3$ was used in the composition, and the amount of the acid catalyst is such that, when the acid catalyst is combined into the aqueous dispersion of functionalized nano-particles, the pH value of the dispersion is not less than 2, preferably not less than 2.1, and more preferably not less than 2.2, meanwhile, the pH value of the dispersion is not greater than 5, preferably not greater than 4, and more preferably not greater than 3. One of ordinary skill in the art would understand that the addition of acid catalyst is optional for the composition of the present invention, depending on whether or not the aqueous dispersion of functionalized nano-particles may release protons upon hydrolysis/ionization, and therefore result in a reduced pH value. For example, assuming nano-particles of $SiO_2$ are used in the aqueous dispersion, the hydroxyl groups existing on the $SiO_2$ particles may be ionized to release protons, and as a result, the pH value of the aqueous dispersion of $SiO_2$ nano-particles will be reduced to a relatively low value. Generally, if the resulting pH value is within the mentioned preferred ranges, then it is possible not to add an additional acid catalyst into the composition.

According to another aspect of the present invention, a method for preparing a coating composition is provided as follows. The method comprises the steps of:

1) mixing silanes of formula (I) to obtain a first component of the composition;
2) dispersing functionalized nano-particles whereof the functional groups are capable of condensing with hydroxyl groups, and mixing the dispersion with an inorganic and/or organic acid catalyst, to obtain a second component of the composition;
3) keeping the first component and the second component apart from each other, and before application, mixing the first component and the second component together, to obtain the coating composition.

In one of the embodiments of the present invention, the silanes used in step 1) of the method for preparing a coating composition are selected from the group as defined above.

In one of the embodiments of the present invention, the nano-particles used in step 2) of the method for preparing a coating composition are made of materials selected from silica, alumina and zirconia (zirconium dioxide), zinc oxide, titanium dioxide, or a combination thereof.

In one of the embodiments of the present invention, the nano-particles used in step 2) of the method for preparing a coating composition are functionalized with hydroxyl, carboxyl, amino, epoxy, and/or aldehyde groups.

In one of the embodiments of the present invention, the method for preparing a coating composition may further comprise one or more of the step of adding a suitable solvent or diluents to the first component obtained in step 1) and/or second component obtained in step 2), or before, during or after mixing in step 3). Preferably, the solvent is selected from methanol, ethanol, n-propanol, isopropanol, iso-butanol, ethylene glycol butyl ether, or a mixture thereof. More preferably, the solvent is selected from ethanol, isopropanol and/or iso-butanol. Most preferably, the solvent is isopropanol. If a solvent is used in several steps or in several components, then it can be advantageous to use the same or different solvents in said steps and components.

According to still another aspect of the present invention, it further provides the use of the coating composition to form a coating on a substrate. As the coating of the present invention has good chemical resistance, scratch resistance, stain resistance, etc., it is an excellent solution for coating consumer electronics such as cell phones, laptops, PDAs, and the like, surface or interiors of automotive vehicles, such as car finishes, dashboard coating, inner coating of headlights in a car, and the like, which require a protective coating with the above mentioned properties.

In one of the embodiments of the present invention, the coating composition was specifically used to form a protective coating on the light receiving surface of photovoltaic devices such as solar cells/panels, since the resulting coating according to the present invention has been found to have superior ultraviolet light (UV) transmission properties. Without wishing to be bounded by existing theories, it is believed that the resulting coating of the present invention acts more like an inorganic quartz material. This may be because the organic moiety of the mixture of silanes used in the first component of the coating composition are selected from the groups $R^1$ as presented above, and moreover, these organic groups are not abundant in the mixture of silanes, since the mixture of silanes, on average, has not more than one $R^1$ group per molecule. The low amount of organic groups was found to result in a coating which exhibits superior ultraviolet light (UV) transmission properties, similar to the properties of an inorganic material like quartz.

As discussed above, the coating composition of the present invention is capable of forming a firm 3-dimensional network of siloxane [-Si-O-Si-] bonds upon condensation between silanols and those molecules with functional groups capable of reacting with hydroxyl groups of the silanols. The adhesion of the obtained coating to a substrate is mainly subject to the nature of the formed 3-dimensional network. During the condensation of the coating composition, there is significant shrinkage in volume. Therefore the general physic adhesion force between the coating and the substrate becomes too weak to achieve a good adhesion. However, if the substrate is provided with some reactive functionality groups capable of condensing with hydroxyl group, such as hydroxyl group or carboxylic group etc., on its surface, good adhesion between the coating and the substrate can be achieved during the condensation process (final cure process of the coating composition) because condensation reaction can happen as well between the functionality groups on the substrate and functionality groups in the silanols of the coating composition, and a firm bond or strong adhesion between the coating and the substrate can be generated thereafter. Based on this mechanism, most of metal or glass based materials would be a good substrate for the present coating composition since normally there has an oxide layer on the surface of the metal based materials, and there are inherently a wealth of hydroxyl groups inside or on the surface of glass based materials, their hydroxyl groups on the surface as shown below:

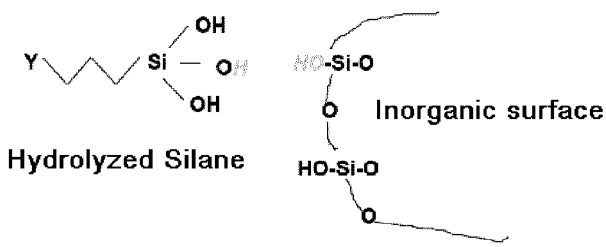
Hydrolyzed Silane
Inorganic surface

It can be seen that chemical bonds may also be formed between the silanols of the coating composition and the substrate. As compared to the prior arts wherein the adhesion between coating and substrate get worse at high crosslink density, the present invention achieves good adhesion and high crosslink density simultaneously.

Above discussion also indicates that the coating composition of the present invention is selective to the substrate. If there has no reactive functionality group on the surface of substrate, then the composition can hardly form a coating with good adhesion to the substrate.

In one of the embodiments of the present invention, the substrate is made of materials selected from silica, quartz, glass, aluminum, copper, alumino-silicates, Mica, Talc, metal oxides, steel, iron, asbestos, nickel, zinc, lead, $CaCO_3$, $CaSO_4$, $BaSO_4$, graphite, and carbon black. Preferably, the substrate is made of materials selected from silica, quartz, glass, aluminum, copper, alumino-silicates, Mica, Talc, metal oxides, steel, iron, asbestos, nickel, and zinc. More preferably, the substrate is made of materials selected from silica, quartz, glass, aluminum, copper, alumino-silicates,

and Mica.

In the meanwhile, for those substrates to which the coating of the present invention has relatively weak adhesion, pre-treatment of substrate is necessary since this process facilitate exposing those reactive functionality groups on the substrate to the silanols of the coating composition. It has been found that a suitable surface pre-treatment depends on the substrate that is to be coated. For example, wiping with isopropyl alcohol is good enough for an aluminum substrate, but for a stainless steel or glass substrate, it is necessary to have an extra treatment by detergents in order to achieve a clean surface with sufficient groups that can react with the silanols not being covered by impurities on the substrate surface.

The one or more optional additives to be used in accordance with the invention can be of any conventional type, including, but not limited to, stabilizers, colorants, dyes, pigments, rheology modifiers, such as leveling agents, and the like.

Advantages of the present invention are as follows:

1) The coating composition according to the present invention is prepared from readily available and affordable materials such as commercially available organofunctional or (non-functional) organoalkoxysilanes, nano-particle materials, and acid catalysts. Moreover, the composition is capable of forming a coating under mild conditions. So the present invention has an improvement in terms of ease of operation and cost.
2) The coating composition according to the present invention creates glass like inorganic coating onto varieties of substrate surfaces such as metallic surface, glass surface and metal oxide surface etc. The inorganic coating has high mechanical performance and excellent chemical resistance without sacrificing the performance of adhesion to substrate, impact resistance and thermal shock resistance. In addition the coating is easy to clean or self clean.
3) The coating resulted from the composition of the present invention is UV light transparent, and therefore can be used as a coating for solar cell panels.
4) The coating composition according to the present invention has a long shell life, which can be stored for a long term, and make the composition of the present invention technically and economically feasible.
5) The coating composition according to the present invention is friendly to the environment.

Description of Drawings

The above and other objectives, features and advantages of the present invention will become more apparent to those of ordinary skill in the art by describing in embodiments thereof with reference to the accompanying drawings.

Figure 1 is a diagram showing the stability test results of the coating composition prepared according to recipe 4-1 of example 8.
Figure 2 is a diagram showing the UV absorption comparison test results of the coating composition prepared according to recipe 4-1 of example 8 and the other materials.

Experimental

The following examples are offered to illustrate, but not to limit the claimed invention.

**Raw Materials**

MTES: methyltriethoxysilane (chemically pure, available from Evonik Degussa, Shanghai),
MTMS: methyltrimethoxysilane (chemically pure, available from Evonik Degussa, Shanghai)
TEOS: tetraethoxysilane (chemically pure, available from Evonik Degussa, Shanghai)
IPA: isopropanol (chemically pure, available from Sigma aldrich, China)
MEMO:Methacryloxypropyl trimethoxy silane (chemically pure, available from Evonik Degussa, Shanghai)
AK410, an aqueous dispersion of nano-silicon dioxide available from Akzo Nobel at No. 137 Jiangtian east road, Shanghai.
NanoBYK3600: a nano alumina slurry available from BYK Additives & Instruments at Shanghai, China.

Example 1

21.7 g of methyltriethoxysilane (MTES), and 11.6 g of tetraethoxysilane (TEOS) were passed through 1 μm filter, respectively, then mixed together with stirring for 20-30 minutes, to obtain a component 1.

56.8 g of AK410 to which $HNO_3$ has been added to adjust the pH to 2.4, and 10.9 g of isopropanol were passed through 1 μm filter, respectively, then mixed together with stirring for 20-30 minutes, to obtain the component 2.

The above obtained components 1 and 2 were mixed together, with stirring for 2~3 hours under room temperature. Isopropanol was further added into the mixture with the weight ratio between the mixed components and isopropanol being 100 : 110, and stirring for 20-30 minutes. The resulting composition was then ready for application onto a substrate.

Example 2

27.02 g of methyltrimethoxysilane (MTMS), 17.28 g of tetraethoxysilane (TEOS), and 20.36 g of isopropanol were passed through 1 μm filter, respectively, then mixed together with stirring for 20-30 minutes, to obtain the component 1.

17.61 g of AK410 to which $HNO_3$ has been added to adjust pH as 2.4, and 17.72 g of $H_2O$ were passed through 1 μm filter, respectively, then mixed together with stirring for 20-30 minutes, to obtain the component 2.

The above obtained components 1 and 2 were mixed together, with stirring for 2~3 hours and under room temperature. Isopropanol was further added into the mixture with the weight ratio between the mixed components and isopropanol being 100 : 110, and stirring for 20-30 minutes. The resulting composition was then ready for application onto a substrate.

Example 3

32.0 g of methyltriethoxysilane (MTES), 15.6 g of tetraethoxysilane (TEOS), and 16.0 g of isopropanol were passed through 1 μm filter, respectively, then mixed together with stirring for 20-30 minutes, to obtain the component 1.

15.9 g of AK410 to which $HNO_3$ has been added to adjust pH as 2.5, and 18.0 g of $H_2O$ were passed through 1 μm filter, respectively, then mixed together with stirring for 20-30 minutes, to obtain the component 2.

The above obtained components 1 and 2 were mixed together, with stirring for 2~3 hours and under room temperature. Isopropanol was further added into the mixture with the weight ratio between the mixed components and isopropanol being 100 : 110, and stirring for 20-30 minutes. The resulting composition was then ready for application onto a substrate.

Example 4

Performance test for coating compositions prepared in examples 1 - 3

The coating compositions obtained according to examples 1 - 3 were applied to substrates, and cured at a temperature above 50°C for a certain period depending on the respective recipes, until quartz-like coatings were formed on the substrates.

The resulting coated substrates were put into a series of tests including Cross-Cut Adhesion Test, Pencil Hardness Test, Rod Test, Scuff Resistance Test, Steel Wool Micro-Scratch Tests (Rim and Apple), Suntan Oil Test, Thermal Shock Test, Hot Water Bath Test, Head Damp Test, and QUV Test. The resulting data was shown as table 1 below.

Table 1- data of performance test on coating compositions of examples 1-3

| Composition No. | Adhesion | Pencil hardness | Rim steel wool | Apple steel wool | Suntan oil | Thermal shock | Hot water bath | Heat damp in JS | QUV |
|---|---|---|---|---|---|---|---|---|---|
| Example 1 | 5B | >6H on steel | Grade 1 | Pass | No visual change Adhesion: 5B | No visual change Adhesion: 5B | No visual change Adhesion: 5B | 5B, No coating dissolution, cracking, chipping and peeling off | Δ B, No c |
| Example 2 | 5B | >6H on steel | Grade 1 | Pass | No visual change Adhesion: 5B | No visual change Adhesion: 5B | No visual change Adhesion: 5B | 5B, No coating dissolution, cracking, chipping and peeling off | Δ B, No c |
| Example 3 | 5B | >6H on steel | Grade 2 | Pass | No visual change Adhesion: 5B | No visual change Adhesion: 5B | No visual change Adhesion: 5B | 5B, No coating dissolution, cracking, chipping and peeling off | Δ B, No c |

The results indicate that the coating compositions of the present invention exhibited outstanding performance in terms of adhesion to substrate, hardness, scratch resistance, scuff resistance, thermal shock resistance and heat resistance.

Example 5

14.5 g of MEMO, 10.4 g of methyltriethoxysilane (MTES), and 10.2 g of tetraethoxysilane (TEOS) were passed through 1 μm filter, respectively, then mixed together with stirring for 20-30 minutes, to obtain the component 1.
52.5 g of AK410 to which $HNO_3$ has been added to adjust pH as 2.3, and 10.4 g of isopropanol were passed through 1 μm filter, respectively, then mixed together with stirring for 20-30 minutes, to obtain the component 2.
The above obtained components 1 and 2 were mixed together, with stirring for 2~3 hours and under room temperature. Isopropanol was further added into the mixture with the weight ratio between the mixed components and isopropanol being 100 : 110, and stirring for 20-30 minutes. The resulting composition was then ready for application onto a substrate.

Example 6

31.4 g of methyltriethoxysilane (MTES), 15.3 g of tetraethoxysilane (TEOS), and 15.7 g of isopropanol were passed through 1 μm filter, respectively, then mixed together with stirring for 20-30 minutes, to obtain the component 1.
15.6 g of NanoBYK3600 to which $HNO_3$ has been added to adjust pH as 2.6, and 22.0 g of $H_2O$ were passed through 1 μm filter, respectively, then mixed together with stirring for 20-30 minutes, to obtain the component 2.
The above obtained components 1 and 2 were mixed together, with stirring for 2~3 hours and under room temperature. Isopropanol was further added into the mixture with the weight ratio between the mixed components and isopropanol being 100 : 110, and stirring for 20-30 minutes. The resulting composition was then ready for application onto a substrate.

Example 7

Performance test for coating compositions prepared in examples 5 and6

The coating compositions obtained according to examples 5 and 6 were applied to substrates, and cured at a temperature above 50°C for a certain period depending on the respective recipes, until quartz-like coatings were formed on the substrates.
The resulting coated substrates were put into a series of tests including Cross-Cut Adhesion Test, Pencil Hardness Test, Suntan Oil Test, Thermal Shock Test, Hot Water Bath Test. The composition of example 6 was also tested by concentrated $HNO_3$, and there was no mark/corrosion by $HNO_3$ after one hour in contact with concentrated $HNO_3$. The resulting data was shown as table 2 below

Table 2- data of performance test on coating compositions of examples 5 and 6

| Composition No. | Adhesion | Pencil hardness | Suntan oil | Thermal shock | Hot water bath | Concentrated $HNO_3$ test |
|---|---|---|---|---|---|---|
| Example 5 | 5B | >6H on steel | No visual change Adhesion : 5B | No visual change Adhesion : 5B | No visual change Adhesion : 5B | not tested |
| Example 6 | 5B | >6H on steel | No visual change Adhesion : 5B | No visual change Adhesion : 5B | No visual change Adhesion : 5B | No mark after 1 hour |

The results indicate that the coating compositions of the present invention exhibited outstanding performance in terms of adhesion to substrate, hardness, scuff resistance, thermal shock resistance and heat resistance. In addition, the composition of example 6 was found to have excellent anti-corrosion property.

Example 8

59.8 g of any one of the mixtures of methyltrimethoxysilane (MTMS) and tetraethoxysilane (TEOS) as listed in the table 3 below, and 20.1 g of isopropanol were passed through 1 μm filter, respectively, then mixed together with

stirring for 20-30 minutes, to obtain the component 1.

Table 3- mixtures of MTMS and TEOS for component 1

| No. | MTMS(g) | TEOS(g) | IPA(g) | total(g) | TEOS/MTMS |
|---|---|---|---|---|---|
| 4-1 | 36.5 | 23.3 | 20.1 | 79.9 | 0.64 |
| 4-2 | 37.1 | 22.7 | 20.1 | 79.9 | 0.61 |
| 4-3 | 38.3 | 21.5 | 20.1 | 79.9 | 0.56 |
| 4-4 | 38.8 | 21.0 | 20.1 | 79.9 | 0.54 |

20.1 g of $H_2O$ to which $HNO_3$ has been added to adjust pH as 2.6 was passed through 1 μm filter, and used as the component 2.

The above obtained components 1 and 2 were mixed together, with stirring for 2~3 hours and under room temperature. Isopropanol was further added into the mixture with the weight ratio between the mixed components and isopropanol being 100 : 110, and stirring for 20-30 minutes.

The coating compositions were applied to substrates, and cured at a temperature above 50°C for a certain period depending on the respective recipes, until quartz-like coatings were formed on the substrate.

The resulting coated substrates were put into tests including MEK resistance test, pencil hardness test, and steel wool test, wherein the steel wool test was conducted by contacting 0000 steel wool of 2 × 2 $cm^2$ with the sample surface, and applying 1 kg force vertically pushing the 0000 steel wool against the sample surface, then moving the 0000 steel wool on the sample surface back and forth and counting the scratch times until the first scratch is observed on the sample. The resulting data was shown as table 4 below

Table 2- data of performance test on coating compositions with different TEOS/MTMS

| Example No. | 4-1 | 4-2 | 4-3 | 4-4 |
|---|---|---|---|---|
| TEOS/MTMS | 0.64 | 0.61 | 0.56 | 0.54 |
| MEK resistance | Excellent | Excellent | Excellent | Excellent |
| Pencil hardness | 2H on aluminum | 2H on aluminum | 2H on aluminum | 2H on aluminum |
| Steel wool | 1086 | 850 | 700 | 120 |

The results indicate that the coating compositions of the present invention exhibited outstanding performance in terms of MEK resistance, hardness, and scratch resistance.

In addition, the coating composition with the TEOS/MTMS ratio of 0.64 was further tested on storage stability and UV absorption, respectively.

As shown in Figure 1, in the storage stability test, the coating composition was prepared according to the recipe 4-1, and the two components thereof were mixed together and diluted with IPA as mentioned above. The mixture was then stored, and at predetermined time points including 0, 24, 48, 72, and 96 hours after the preparation, the mixture was respectively applied onto substrate and cured, to conduct the above steel wool test. As for the time points of 0, 24, and 48 hours after the preparation, the first scratch was observed after about 1,000 times of the movements of the steel wool; as for the time point of 72 hours after the preparation, the first scratch was observed after about 500 times of the movements of the steel wool; and as for the time point of 72 hours after the preparation, the first scratch was observed after tens of movements of the steel wool.

In the UV absorption test, the coating composition was also prepared according to the recipe 4-1, which was subsequently applied onto a substrate and cured as mentioned above, for UV absorption comparison with the other materials including UV hard coat, UV COB, and microscope glass slide. As shown in Figure 2, the coating formed according to the recipe 4-1 has the light transmission rate of almost 100 % along with the whole tested range of wave length, while the other materials exhibit significant decrease of light transmission in the UV region.

## Claims

**1.** A2K coating composition, which comprises:

a first component containing:

a mixture of silanes of the formula $R^1_n$-Si-$(OR^2)_{4-n}$
wherein, $R^1$ is selected from substituted and unsubstituted alkyl, substituted and unsubstituted cycloalkyl, substituted and unsubstituted heterocycloalkyl, substituted and unsubstituted aryl, substituted and unsubstituted heteroaryl, substituted and unsubstituted alkylthio, substituted and unsubstituted alkylamino, substituted and unsubstituted perfluoroalkyl, and substituted and unsubstituted alkyl halide, $R^1$ having 1-15 carbon atoms, $R^2$ is C1 - C3 alkyl, n=0-4, and n, on average is greater or equal to 0.54 and less than 0.80;
One or more optional solvents selected from methanol, ethanol, n-propanol, isopropanol, iso-butanol, ethylene glycol butyl ether; and
One or more optional additives selected from stabilizers, colorants, dyes, pigments, rheology modifiers,

a second component containing:

an aqueous dispersion of functionalized nano-particles whereof the functional groups are capable of condensing with hydroxyl groups, wherein the functional groups which are capable of condensing with hydroxyl groups are selected from the group consisting of hydroxyl, carboxyl, amino, epoxy, and aldehyde groups;
an inorganic and/or organic acid or base catalyst;
one or more optional solvents; and
one or more optional additives;

wherein the amount of the first component is not less than 7wt%, and not greater than 70wt%, based on the total weight of the composition;
the amount of the second component is not less than 30wt%, and not greater than 93wt%, based on the total weight of the composition,
the total of the first and second components being 100wt%,
wherein the first and second components are not mixed together until application of the composition onto a substrate.

**2.** The composition according to claim 1, which comprises:

a first component containing:

a mixture of silanes of the formula $R^1_n$-Si-$(OR^2)_{4-n}$
wherein, $R^1$ is selected from substituted and unsubstituted alkyl, substituted and unsubstituted cycloalkyl, substituted and unsubstituted heterocycloalkyl, substituted and unsubstituted aryl, substituted and unsubstituted heteroaryl, substituted and unsubstituted alkylthio, substituted and unsubstituted alkylamino, substituted and unsubstituted perfluoroalkyl, and substituted and unsubstituted alkyl halide, $R^1$ having 1-15 carbon atoms, $R^2$ is C1 - C3 alkyl, n=0-4, and n, on average is greater or equal to 0.60 and less than 0.80;
One or more optional solvents selected from methanol, ethanol, n-propanol, isopropanol, iso-butanol, ethylene glycol butyl ether; and
One or more optional additives selected from stabilizers, colorants, dyes, pigments, rheology modifiers,

a second component containing:

an aqueous dispersion of functionalized nano-particles whereof the functional groups are capable of condensing with hydroxyl groups;
an inorganic and/or organic acid or base catalyst;
one or more optional solvents; and
one or more optional additives;

wherein the amount of the first component is not less than 20wt%, and not greater than 65wt%, based on the total weight of the composition;
the amount of the second component is not less than 35wt%, and not greater than 80wt%, based on the total weight of the composition,
the total of the first and second components being 100wt%,
wherein the first and second components are not mixed together until application of the composition.

**3.** The composition according to claim 1, which comprises:

a first component containing:

a mixture of silanes of the formula $R^1_n$-Si-$(OR^2)_{4-n}$
wherein, $R^1$ is selected from substituted and unsubstituted alkyl, substituted and unsubstituted cycloalkyl, substituted and unsubstituted heterocycloalkyl, substituted and unsubstituted aryl, substituted and unsubstituted heteroaryl, substituted and unsubstituted alkylthio, substituted and unsubstituted alkylamino, substituted and unsubstituted perfluoroalkyl, and substituted and unsubstituted alkyl halide, $R^1$ having 1-15 carbon atoms, $R^2$ is C1 - C3 alkyl, n=0-4, and n, on average is greater or equal to 0.70 and less than 0.80;
One or more optional solvents selected from methanol, ethanol, n-propanol, isopropanol, iso-butanol, ethylene glycol butyl ether; and
One or more optional additives selected from stabilizers, colorants, dyes, pigments, rheology modifiers,

a second component containing:

an aqueous dispersion of functionalized nano-particles whereof the functional groups are capable of condensing with hydroxyl groups;
an inorganic and/or organic acid or base catalyst;
one or more optional solvents; and
one or more optional additives;

wherein the amount of the first component is not less than 30wt%, and not greater than 61wt%, based on the total weight of the composition;
the amount of the second component is not less than 39wt%, and not greater than 70wt%, based on the total weight of the composition,
the total of the first and second components being 100wt%,
wherein the first and second components are not mixed together until application of the composition.

**4.** A method for preparing a coating composition according to any one of claims 1-3, which comprises the steps of:

1) mixing silanes of formula (I) according to any one of claims 1-3 to obtain a first component of the composition;
2) dispersing functionalized nano-particles whereof the functional groups are capable of condensing with hydroxyl groups, and mixing the dispersion with an inorganic and/or organic acid or base catalyst, to obtain a second component of the composition;
3) keeping the first component and the second component apart from each other, and before application, mixing the first component and the second component together, to obtain the coating composition.

**5.** The coating composition according to any one of claims 1-3, wherein the silanes are selected from the group consisting of methyltrimethoxysilane, ethyltrimethoxysilane, propyltrimethoxysilane, butyltrimethoxysilane, pentyltrimethoxysilane, hexyltrimethoxysilane, heptyltrimethoxysilane, octyltrimethoxysilane, nonyltrimethoxysilane, decyltrimethoxysilane, methyltriethoxysilane, ethyltriethoxysilane, propyltriethoxysilane, butyltriethoxysilane, pentyltriethoxysilane, hexyltriethoxysilane, heptyltriethoxysilane, octyltriethoxysilane, nonyltriethoxysilane, decyltriethoxysilane, methyltripropoxysilane, ethyltripropoxysilane, propyltripropoxysilane, butyltripropoxysilane, pentyltripropoxysilane, hexyltripropoxysilane, heptyltripropoxysilane, octyltripropoxysilane, nonyltripropoxysilane, decyltripropoxysilane, dimethyldimethoxysilane, diethyldimethoxysilane, dipropyldimethoxysilane, dibutyldimethoxysilane, dipentyldimethoxysilane, dihexyldimethoxysilane, diheptyldimethoxysilane, dioctyldimethoxysilane, dinonyldimethoxysilane, didecyldimethoxysilane, dimethyldiethoxysilane, diethyldiethoxysilane, dipropyldiethoxysilane, dibutyldiethoxysilane, dipentyldiethoxysilane, dihexyldiethoxysilane, diheptyldiethoxysilane, dioctyldiethoxysilane, dinonyldiethoxysilane, didecyldiethoxysilane, dimethyldipropoxysilane, diethyldipropoxysilane, dipropyldipropoxysilane, dibutyldipropoxysilane, dipentyldipropoxysilane, dihexyldipropoxysilane, diheptyldipropoxysilane, dioctyldipropoxysilane, dinonyldipropoxysilane, didecyldipropoxysilane, trimethylmethoxysilane, triethylmethoxysilane, tripropylmethoxysilane, tributylmethoxysilane, tripentylmethoxysilane, trihexylmethoxysilane, triheptylmethoxysilane, trioctylmethoxysilane, trinonylmethoxysilane, tridecylmethoxysilane, trimethylethoxysilane, triethylethoxysilane, tripropylethoxysilane, tributylethoxysilane, tripentylethoxysilane, trihexylethoxysilane, triheptylethoxysilane, trioctylethoxysilane, trinonylethoxysilane, tridecylethoxysilane, trimethylpropoxysilane, triethylpropoxysilane, tripropylpropoxysilane, tributylpropoxysilane, tripentylpropoxysilane, trihexylpropoxysilane, triheptylpropoxysilane, trioctylpropoxysilane, trinonylpropoxysilane, tridecylpropoxysilane, and tetraethoxysilane.

6. The coating composition according to any one of claims 1-3, or 5, wherein the nano-particles are made of materials selected from one or more of the group consisting of silica, alumina, zirconium dioxide, zinc oxide, and titanium dioxide.

7. The coating composition according to any one of claims 1-3, 5 or 6, wherein the first and/or second component further comprise one or more of solvents selected from methanol, ethanol, n-propanol, isopropanol, iso-butanol, ethylene glycol butyl ether.

8. The coating composition according to any one of claims 1-3, 5-7, wherein the acid catalyst is selected from one or more of the group consisting of HF, HCl, HI, $H_2SO_4$, $H_3PO_4$, $HNO_3$, formic acid, acetic acid, benzoic acid, lactic acid, alginic acid, citric acid, malic acid, succinic acid, tartaric acid.

9. The coating composition according to any one of claims 1-3, 5-8 wherein the base catalyst is selected from one or more of the group consisting of NaOH, KOH, ammonia.

10. The coating composition according to claim 8 or 9, wherein the amount of the acid catalyst is such that when the acid catalyst is combined with the aqueous dispersion of functionalized nano-particles, the pH value of the dispersion is not less than 2, and not greater than 5.

11. A kit of the 2K composition according to any one of claims 1-3, 5-10, wherein the first component and second component of the 2K composition are packaged separately, such that the first and second components are not in contact with each other.

12. Use of the coating composition according to any one of claims 1-3, 5-10 to form a coating on a substrate that is preferably in contact with corrosive media; exposed to contact corrosion; exposed to friction or wearing; in need of resistance against scratching, or on a substrate that needs to be painted and/or lacquered.

13. The use according to claim 12, wherein the coating composition is used to form a protective coating on the surface of consumer electronic devices, the surface or interiors of automotive vehicles, or the light receiving surface of photovoltaic devices.

14. The use according to claim 12 or 13, wherein the substrate is made of materials selected from silica, quartz, glass, aluminum, copper, alumino-silicates, Mica, Talc, metal oxides, steel, iron, asbestos, nickel, zinc, lead, $CaCO_3$, $CaSO_4$, $BaSO_4$, graphite, and carbon black.

15. The use according to any one of claims 12-14, wherein the substrate is pretreated with isopropyl alcohol to achieve a clean surface of the substrate and expose reactive functionality groups thereon.

## Patentansprüche

1. 2K-Beschichtungszusammensetzung, die Folgendes umfasst:

eine erste Komponente, enthaltend:

eine Mischung von Silanen der Formel $R^1{}_n$-Si-$(OR^2)_{4-n}$,
wobei $R^1$ ausgewählt ist aus substituiertem und unsubstituiertem Alkyl, substituiertem und unsubstituiertem Cycloalkyl, substituiertem und unsubstituiertem Heterocycloalkyl, substituiertem und unsubstituiertem Aryl, substituiertem und unsubstituiertem Heteroaryl, substituiertem und unsubstituiertem Alkylthio, substituiertem und unsubstituiertem Alkylamino, substituiertem und unsubstituiertem Perfluoralkyl und substituiertem und unsubstituiertem Alkylhalid, wobei $R^1$ 1-15 Kohlenstoffatome hat, $R^2$ gleich C1 - C3 Alkyl ist, n=0-4 ist und n im Durchschnitt größer oder gleich 0,54 und kleiner als 0,80 ist;
ein oder mehrere optionale Lösungsmittel, ausgewählt aus Methanol, Ethanol, n-Propanol, Isopropanol, Isobutanol, Ethylenglycolbutylther; und
ein oder mehrere optionale Additive, ausgewählt aus Stabilisatoren, Färbemitteln, Farbstoffen, Pigmenten, Rheologiemodifizierern,

eine zweite Komponente, enthaltend:

eine wässrige Dispersion funktionalisierter Nanopartikel, deren funktionelle Gruppen in der Lage sind, mit Hydroxylgruppen zu kondensieren, wobei die funktionellen Gruppen, die in der Lage sind, mit Hydroxylgruppen zu kondensieren, ausgewählt sind aus der Gruppe, bestehend aus Hydroxyl-, Carboxyl-, Amino-, Epoxy- und Aldehydgruppen;
einen anorganischen und/oder organischen Säure- oder Basenkatalysator;
ein oder mehrere optionale Lösungsmittel; und
ein oder mehrere optionale Additive;

wobei die Menge der ersten Komponente nicht weniger als 7 Gew.% und nicht mehr als 70 Gew.%, basierend auf dem Gesamtgewicht der Zusammensetzung, beträgt;
die Menge der zweiten Komponente nicht weniger als 30 Gew.% und nicht mehr als 93 Gew.%, basierend auf dem Gesamtgewicht der Zusammensetzung, beträgt,
wobei die Gesamtmenge der ersten und zweiten Komponente 100 Gew.% beträgt,
wobei die erste und zweite Komponente nicht vor dem Auftragen der Zusammensetzung auf ein Substrat vermischt werden.

**2.** Zusammensetzung nach Anspruch 1, die Folgendes umfasst:

eine erste Komponente, enthaltend:

eine Mischung von Silanen der Formel $R^1_n\text{-Si-}(OR^2)_{4-n}$,
wobei $R^1$ ausgewählt ist aus substituiertem und unsubstituiertem Alkyl, substituiertem und unsubstituiertem Cycloalkyl, substituiertem und unsubstituiertem Heterocycloalkyl, substituiertem und unsubstituiertem Aryl, substituiertem und unsubstituiertem Heteroaryl, substituiertem und unsubstituiertem Alkylthio, substituiertem und unsubstituiertem Alkylamino, substituiertem und unsubstituiertem Perfluoralkyl und substituiertem und unsubstituiertem Alkylhalid, wobei $R^1$ 1-15 Kohlenstoffatome hat, $R^2$ gleich C1 - C3 Alkyl ist, n=0-4 ist und n im Durchschnitt größer oder gleich 0,60 und kleiner als 0,80 ist;
ein oder mehrere optionale Lösungsmittel, ausgewählt aus Methanol, Ethanol, n-Propanol, Isopropanol, Isobutanol, Ethylenglycolbutylther; und
ein oder mehrere optionale Additive, ausgewählt aus Stabilisatoren, Färbemitteln, Farbstoffen, Pigmenten, Rheologiemodifizierern,

eine zweite Komponente, enthaltend:

eine wässrige Dispersion funktionalisierter Nanopartikel, deren funktionelle Gruppen in der Lage sind, mit Hydroxylgruppen zu kondensieren; einen anorganischen und/oder organischen Säure- oder Basenkatalysator;
ein oder mehrere optionale Lösungsmittel; und
ein oder mehrere optionale Additive;

wobei die Menge der ersten Komponente nicht weniger als 20 Gew.% und nicht mehr als 65 Gew.%, basierend auf dem Gesamtgewicht der Zusammensetzung, beträgt;
die Menge der zweiten Komponente nicht weniger als 35 Gew.% und nicht mehr als 80 Gew.%, basierend auf dem Gesamtgewicht der Zusammensetzung, beträgt,
wobei die Gesamtmenge der ersten und zweiten Komponente 100 Gew.% beträgt,
wobei die erste und zweite Komponente nicht vor dem Auftragen der Zusammensetzung vermischt werden.

**3.** Zusammensetzung nach Anspruch 1, die Folgendes umfasst:

eine erste Komponente, enthaltend:

eine Mischung von Silanen der Formel $R^1_n\text{-Si-}(OR^2)_{4-n}$,
wobei $R^1$ ausgewählt ist aus substituiertem und unsubstituiertem Alkyl, substituiertem und unsubstituiertem Cycloalkyl, substituiertem und unsubstituiertem Heterocycloalkyl, substituiertem und unsubstituiertem Aryl, substituiertem und unsubstituiertem Heteroaryl, substituiertem und unsubstituiertem Alkylthio, substituiertem und unsubstituiertem Alkylamino, substituiertem und unsubstituiertem Perfluoralkyl und substituiertem und unsubstituiertem Alkylhalid, wobei $R^1$ 1-15 Kohlenstoffatome hat, $R^2$ gleich C1 - C3 Alkyl ist, n=0-4 ist und n im Durchschnitt größer oder gleich 0,70 und kleiner als 0,80 ist;

ein oder mehrere optionale Lösungsmittel, ausgewählt aus Methanol, Ethanol, n-Propanol, Isopropanol, Isobutanol, Ethylenglycolbutylether; und
ein oder mehrere optionale Additive, ausgewählt aus Stabilisatoren, Färbemitteln, Farbstoffen, Pigmenten, Rheologiemodifizierern,

eine zweite Komponente, enthaltend:

eine wässrige Dispersion funktionalisierter Nanopartikel, deren funktionelle Gruppen in der Lage sind, mit Hydroxylgruppen zu kondensieren; einen anorganischen und/oder organischen Säure- oder Basenkatalysator;
eine oder mehrere optionale Lösungsmittel; und
ein oder mehrere optionale Additive;

wobei die Menge der ersten Komponente nicht weniger als 30 Gew.% und nicht mehr als 61 Gew.%, basierend auf dem Gesamtgewicht der Zusammensetzung, beträgt;
die Menge der zweiten Komponente nicht weniger als 39 Gew.% und nicht mehr als 70 Gew.%, basierend auf dem Gesamtgewicht der Zusammensetzung, beträgt,
wobei die Gesamtmenge der ersten und zweiten Komponente 100 Gew.% beträgt,
wobei die erste und zweite Komponente nicht vor dem Auftragen der Zusammensetzung vermischt werden.

**4.** Verfahren zur Herstellung einer Beschichtungszusammensetzung nach einem der Ansprüche 1-3, das die folgenden Schritte umfasst:

1) Mischen der Silane der Formel (I) nach einem der Ansprüche 1-3, um eine erste Komponente der Zusammensetzung zu erhalten;
2) Dispergieren funktionalisierter Nanopartikel, deren funktionelle Gruppen in der Lage sind, mit Hydroxylgruppen zu kondensieren, und Mischen der Dispersion mit einem anorganischen und/oder organischen Säure- oder Basenkatalysator, um eine zweite Komponente der Zusammensetzung zu erhalten;
3) voneinander Getrennthalten der ersten und zweite Komponente und vor dem Auftragen, Vermischen der ersten Komponente und der zweiten Komponente, um die Beschichtungszusammensetzung zu erhalten.

**5.** Beschichtungszusammensetzung nach einem der Ansprüche 1-3, wobei die Silane ausgewählt sind aus der Gruppe, bestehend aus Methyltrimethoxysilan, Ethyltrimethoxysilan, Propyltrimethoxysilan, Butyltrimethoxysilan, Pentyltrimethoxysilan, Hexyltrimethoxysilan, Heptyltrimethoxysilan, Octyltrimethoxysilan, Nonyltrimethoxysilan, Decyltrimethoxysilan, Methyltriethoxysilan, Ethyltriethoxysilan, Propyltriethoxysilan, Butyltriethoxysilan, Pentyltriethoxysilan, Hexyltriethoxysilan, Heptyltriethoxysilan, Octyltriethoxysilan, Nonyltriethoxysilan, Decyltriethoxysilan, Methyltripropoxysilan, Ethyltripropoxysilan, Propyltripropoxysilan, Butyltripropoxysilan, Pentyltripropoxysilan, Hexyltripropoxysilan, Heptyltripropoxysilan, Octyltripropoxysilan, Nonyltripropoxysilan, Decyltripropoxysilan, Dimethyldimethoxysilan, Diethyldimethoxysilan, Dipropyldimethoxysilan, Dibutyldimethoxysilan, Dipentyldimethoxysilan, Dihexyldimethoxysilan, Diheptyldimethoxysilan, Dioctyldimethoxysilan, Dinonyldimethoxysilan, Didecyldimethoxysilan, Dimethyldiethoxysilane, Diethyldiethoxysilan, Dipropyldiethoxysilan, Dibutyldiethoxysilan, Dipentyldiethoxysilan, Dihexyldiethoxysilane, Diheptyldiethoxysilan, Dioctyldiethoxysilan, Dinonyldiethoxysilan, Didecyldiethoxysilan, Dimethyldipropoxysilan, Diethyldipropoxysilan, Dipropyldipropoxysilan, Dibutyldipropoxysilan, Dipentyldipropoxysilan, Dihexyldipropoxysilan, Diheptyldipropoxysilan, Dioctyldipropoxysilan, Dinonyldipropoxysilan, Didecyldipropoxysilan, Trimethylmethoxysilan, Triethylmethoxysilan, Tripropylmethoxysilan, Tributylmethoxysilan, Tripentylmethoxysilan, Trihexylmethoxysilan, Triheptylmethoxysilan, Trioctylmethoxysilan, Trinonylmethoxysilan, Tridecylmethoxysilan, Trimethylethoxysilan, Triethylethoxysilan, Tripropylethoxysilan, Tributylethoxysilan, Tripentylethoxysilan, Trihexylethoxysilan, Triheptylethoxysilan, Trioctylethoxysilan, Trinonylethoxysilan, Tridecylethoxysilan, Trimethylpropoxysilan, Triethylpropoxysilan, Tripropylpropoxysilan, Tributylpropoxysilan, Tripentylpropoxysilan, Trihexylpropoxysilan, Triheptylpropoxysilan, Trioctylpropoxysilan, Trinonylpropoxysilan, Tridecylpropoxysilan und Tetraethoxysilan.

**6.** Beschichtungszusammensetzung nach einem der Ansprüche 1-3 oder 5, wobei die Nanopartikel aus Materialien hergestellt sind, ausgewählt aus einem oder mehreren der Gruppe, bestehend aus Siliziumdioxid, Aluminiumoxid, Zirkoniumdioxid, Zinkoxid und Titandioxid.

**7.** Beschichtungszusammensetzung nach einem der Ansprüche 1-3, 5 oder 6, wobei die erste und/oder zweite Komponente weiterhin ein oder mehrere Lösungsmittel umfasst, ausgewählt aus Methanol, Ethanol, n-Propanol, Isopropanol, Isobutanol, Ethylenglycolbutylether.

**8.** Beschichtungszusammensetzung nach einem der Ansprüche 1-3, 5-7, wobei der Säurekatalysator ausgewählt ist aus einem oder mehreren der Gruppe, bestehend aus HF, HCl, HI, $H_2SO_4$, $H_3PO_4$, $HNO_3$, Ameisensäure, Essigsäure, Benzoesäure, Milchsäure, Alginsäure, Zitronensäure, Apfelsäure, Bernsteinsäure, Weinsäure.

**9.** Beschichtungszusammensetzung nach einem der Ansprüche 1-3, 5-8, wobei der Basenkatalysator ausgewählt ist aus einem oder mehreren der Gruppe, bestehend aus NaOH, KOH, Ammoniak.

**10.** Beschichtungszusammensetzung nach Anspruch 8 oder 9, wobei die Menge des Säurekatalysators derart ist, dass, wenn der Säurekatalysator mit der wässrigen Dispersion funktionalisierter Nanopartikel kombiniert wird, der pH-Wert der Dispersion nicht weniger als 2 und nicht mehr als 5 beträgt.

**11.** Kit der 2K-Zusammensetzung nach einem der Ansprüche 1-3, 5-10, wobei die erste Komponente und die zweite Komponente der 2K-Zusammensetzung separat verpackt sind, so dass die erste und zweite Komponente nicht miteinander in Berührung stehen.

**12.** Verwendung der Beschichtungszusammensetzung nach einem der Ansprüche 1-3, 5-10, um eine Beschichtung auf einem Substrat herzustellen, das vorzugsweise in Kontakt mit korrosiven Medien steht, Kontaktkorrosion ausgesetzt ist, Reibung oder Verschleiß ausgesetzt ist, einen Kratzschutz aufweisen muss, oder auf einem Substrat, das gestrichen und/oder lackiert werden muss.

**13.** Verwendung nach Anspruch 12, wobei die Beschichtungszusammensetzung verwendet wird, um eine Schutzschicht auf der Oberfläche von Unterhaltungselektronikgeräten, der Oberfläche oder dem Innenraum von Kraftfahrzeugen oder der Lichtempfangsfläche von Photovoltaikanlagen herzustellen.

**14.** Verwendung nach Anspruch 12 oder 13, wobei das Substrat aus Materialien hergestellt ist, ausgewählt aus Siliziumdioxid, Quarz, Glas, Aluminium, Kupfer, Aluminosilikaten, Glimmer, Talk, Metalloxiden, Stahl, Eisen, Asbest, Nickel, Zink, Blei, $CaCO_3$, $CaSO_4$, $BaSO_4$, Graphit und Carbon Black.

**15.** Verwendung nach einem der Ansprüche 12-14, wobei das Substrat mit Isopropylalkohol vorbehandelt ist, um ein saubere Substratoberfläche zu erhalten und reaktive Funktionalitätsgruppen darauf freizulegen.

## Revendications

**1.** Composition de revêtement à deux composants, qui comprend :

un premier composant contenant :

un mélange de silanes de la formule $R^1_n$-Si-$(OR^2)_{4-n}$ dans laquelle, $R^1$ est choisi parmi un alkyle substitué et non substitué, un cycloalkyle substitué et non substitué, un hétérocycloalkyle substitué et non substitué, un aryle substitué et non substitué, un hétéroaryle substitué et non substitué, un alkylthio substitué et non substitué, un alkylamino substitué et non substitué, un perfluoroalkyle substitué et non substitué et un halogénure d'alkyle substitué et non substitué, $R^1$ ayant 1 à 15 atome(s) de carbone, $R^2$ représente un alkyle en $C_1$ à $C_3$, n = 0 à 4 et n est en moyenne supérieur ou égal à 0,54 et inférieur à 0,80 ;
un ou plusieurs solvant(s) facultatif(s) choisi(s) parmi le méthanol, l'éthanol, le n-propanol, l'isopropanol, l'isobutanol, l'éther butylique d'éthylène glycol ; et
un ou plusieurs additif(s) facultatif(s) choisi(s) parmi des stabilisants, des colorants, des teintures, des pigments, des modificateurs de rhéologie,

un deuxième composant contenant :

une dispersion aqueuse de nanoparticules fonctionnalisées dont les groupes fonctionnels sont capables de se condenser avec des groupes hydroxyle, où les groupes fonctionnels qui sont capables de se condenser avec des groupes hydroxyle sont choisis dans le groupe constitué par des groupes hydroxyle, carboxyle, amino, époxy et aldéhyde ;
un catalyseur acide ou basique inorganique et/ou organique ;

un ou plusieurs solvant(s) facultatif(s) ; et
un ou plusieurs additif(s) facultatif(s) ;

dans laquelle la quantité du premier composant n'est pas inférieure à 7% en poids et n'est pas supérieure à 70% en poids, par rapport au poids total de la composition ;
la quantité du deuxième composant n'est pas inférieure à 30% en poids et n'est pas supérieure à 93% en poids, par rapport au poids total de la composition,
le total des premier et deuxième composants étant de 100% en poids,
dans laquelle les premier et deuxième composants ne sont pas mélangés ensemble jusqu'à l'application de la composition sur un substrat.

**2.** Composition selon la revendication 1, qui comprend :

un premier composant contenant :

un mélange de silanes de la formule $R^1_n$-Si-$(OR^2)_{4-n}$ dans laquelle, $R^1$ est choisi parmi un alkyle substitué et non substitué, un cycloalkyle substitué et non substitué, un hétérocycloalkyle substitué et non substitué, un aryle substitué et non substitué, un hétéroaryle substitué et non substitué, un alkylthio substitué et non substitué, un alkylamino substitué et non substitué, un perfluoroalkyle substitué et non substitué et un halogénure d'alkyle substitué et non substitué, $R^1$ ayant 1 à 15 atome(s) de carbone, $R^2$ représente un alkyle en $C_1$ à $C_3$, n = 0 à 4 et n est en moyenne supérieur ou égal à 0,60 et inférieur à 0,80 ;
un ou plusieurs solvant(s) facultatif(s) choisi(s) parmi le méthanol, l'éthanol, le n-propanol, l'isopropanol, l'isobutanol, l'éther butylique d'éthylène glycol ; et
un ou plusieurs additif(s) facultatif(s) choisi(s) parmi des stabilisants, des colorants, des teintures, des pigments, des modificateurs de rhéologie,

un deuxième composant contenant :

une dispersion aqueuse de nanoparticules fonctionnalisées dont les groupes fonctionnels sont capables de se condenser avec des groupes hydroxyle ;
un catalyseur acide ou basique inorganique et/ou organique ;
un ou plusieurs solvant(s) facultatif(s) ; et
un ou plusieurs additif(s) facultatif(s) ;

dans laquelle la quantité du premier composant n'est pas inférieure à 20% en poids et n'est pas supérieure à 65% en poids, par rapport au poids total de la composition ;
la quantité du deuxième composant n'est pas inférieure à 35% en poids et n'est pas supérieure à 80% en poids, par rapport au poids total de la composition,
le total des premier et deuxième composants étant de 100% en poids,
dans laquelle les premier et deuxième composants ne sont pas mélangés ensemble jusqu'à l'application de la composition.

**3.** Composition selon la revendication 1, qui comprend :

un premier composant contenant :

un mélange de silanes de la formule $R^1_n$-Si-$(OR^2)_{4-n}$ dans laquelle, $R^1$ est choisi parmi un alkyle substitué et non substitué, un cycloalkyle substitué et non substitué, un hétérocycloalkyle substitué et non substitué, un aryle substitué et non substitué, un hétéroaryle substitué et non substitué, un alkylthio substitué et non substitué, un alkylamino substitué et non substitué, un perfluoroalkyle substitué et non substitué et un halogénure d'alkyle substitué et non substitué, $R^1$ ayant 1 à 15 atome(s) de carbone, $R^2$ représente un alkyle en $C_1$ à $C_3$, n = 0 à 4 et n est en moyenne supérieur ou égal à 0,70 et inférieur à 0,80 ;
un ou plusieurs solvant(s) facultatif(s) choisi(s) parmi le méthanol, l'éthanol, le n-propanol, l'isopropanol, l'isobutanol, l'éther butylique d'éthylène glycol ; et
un ou plusieurs additif(s) facultatif(s) choisi(s) parmi des stabilisants, des colorants, des teintures, des pigments, des modificateurs de rhéologie,

un deuxième composant contenant :

une dispersion aqueuse de nanoparticules fonctionnalisées dont les groupes fonctionnels sont capables de se condenser avec des groupes hydroxyle ;
un catalyseur acide ou basique inorganique et/ou organique ;
un ou plusieurs solvant(s) facultatif(s) ; et
un ou plusieurs additif(s) facultatif(s) ;

dans laquelle la quantité du premier composant n'est pas inférieure à 30% en poids et n'est pas supérieure à 61% en poids, par rapport au poids total de la composition ;
la quantité du deuxième composant n'est pas inférieure à 39% en poids et n'est pas supérieure à 70% en poids, par rapport au poids total de la composition,
le total des premier et deuxième composants étant de 100% en poids,
dans laquelle les premier et deuxième composants ne sont pas mélangés ensemble jusqu'à l'application de la composition.

**4.** Procédé de préparation d'une composition de revêtement selon l'une quelconque des revendications 1 à 3, qui comprend les étapes qui consistent :

1) à mélanger des silanes de formule (I) selon l'une quelconque des revendications 1 à 3 pour obtenir un premier composant de la composition ;
2) à disperser des nanoparticules fonctionnalisées dont les groupes fonctionnels sont capables de se condenser avec des groupes hydroxyle, et à mélanger la dispersion avec un catalyseur acide ou basique inorganique et/ou organique pour obtenir un deuxième composant de la composition ;
3) à maintenir le premier composant et le deuxième composant espacés, et avant l'application, à mélanger le premier composant et le deuxième composant ensemble, pour obtenir la composition de revêtement.

**5.** Composition de revêtement selon l'une quelconque des revendications 1 à 3, dans laquelle les silanes sont choisis dans le groupe constitué par le méthyltriméthoxysilane, l'éthyltriméthoxysilane, le propyltriméthoxysilane, le butyltriméthoxysilane, le pentyltriméthoxysilane, l'hexyltriméthoxysilane, l'heptyltriméthoxysilane, l'octyltriméthoxysilane, le nonyltriméthoxysilane, le décyltriméthoxysilane, le méthyltriéthoxysilane, l'éthyltriéthoxysilane, le propyltriéthoxysilane, le butyltriéthoxysilane, le pentyltriéthoxysilane, l'hexyltriéthoxysilane, l'heptyltriéthoxysilane, l'octyltriéthoxysilane, le nonyltriéthoxysilane, le décyltriéthoxysilane, le méthyltripropoxysilane, l'éthyltripropoxysilane, le propyltripropoxysilane, le butyltripropoxysilane, le pentyltripropoxysilane, l'hexyltripropoxysilane, l'heptyltripropoxysilane, l'octyltripropoxysilane, le nonyltripropoxysilane, le décyltripropoxysilane, le diméthyldiméthoxysilane, le diéthyldiméthoxysilane, le dipropyldiméthoxysilane, le dibutyldiméthoxysilane, le dipentyldiméthoxysilane, le dihexyldiméthoxysilane, le diheptyldiméthoxysilane, le dioctyldiméthoxysilane, le dinonyldiméthoxysilane, le didécyldiméthoxysilane, le diméthyldiéthoxysilane, le diéthyldiéthoxysilane, le dipropyldiéthoxysilane, le dibutyldiéthoxysilane, le dipentyldiéthoxysilane, le dihexyldiéthoxysilane, le diheptyldiéthoxysilane, le dioctyldiéthoxysilane, le dinonyldiéthoxysilane, le didécyldiéthoxysilane, le diméthyldipropoxysilane, le diéthyldipropoxysilane, le dipropyldipropoxysilane, le dibutyldipropoxysilane, le dipentyldipropoxysilane, le dihexyldipropoxysilane, le diheptyldipropoxysilane, le dioctyldipropoxysilane, le dinonyldipropoxysilane, le didécyldipropoxysilane, le triméthylméthoxysilane, le triéthylméthoxysilane, le tripropylméthoxysilane, le tributylméthoxysilane, le tripentylméthoxysilane, le trihexylméthoxysilane, le triheptylméthoxysilane, le trioctylméthoxysilane, le trinonylméthoxysilane, le tridécylméthoxysilane, le triméthyléthoxysilane, le triéthyléthoxysilane, le tripropyléthoxysilane, le tributyléthoxysilane, le tripentyléthoxysilane, le trihexyléthoxysilane, le triheptyléthoxysilane, le trioctyléthoxysilane, le trinonyléthoxysilane, le tridécyléthoxyysilane, le triméthylpropoxysilane, le triéthylpropoxysilane, le tripropylpropoxysilane, le tributylpropoxysilane, le tripentylpropoxysilane, le trihexylpropoxysilane, le triheptylpropoxysilane, le trioctylpropoxysilane, le trinonylpropoxysilane, le tridécylpropoxysilane et le tétraéthoxysilane.

**6.** Composition de revêtement selon l'une quelconque des revendications 1 à 3 ou 5, dans laquelle les nanoparticules sont réalisées en des matériaux choisis parmi un ou plusieurs du groupe constitué par la silice, l'alumine, le dioxyde de zirconium, l'oxyde de zinc et le dioxyde de titane.

**7.** Composition de revêtement selon l'une quelconque des revendications 1 à 3, 5 ou 6, dans laquelle le premier composant et/ou le deuxième composant comprend/comprennent en outre un ou plusieurs des solvants choisis parmi le méthanol, l'éthanol, le n-propanol, l'isopropanol, l'isobutanol, l'éther butylique d'éthylène glycol.

**8.** Composition de revêtement selon l'une quelconque des revendications 1 à 3, 5 à 7, dans laquelle le catalyseur acide est choisi parmi un ou plusieurs du groupe constitué par HF, HCl, HI, $H_2SO_4$, $H_3PO_4$, $HNO_3$, l'acide formique,

l'acide acétique, l'acide benzoïque, l'acide lactique, l'acide alginique, l'acide citrique, l'acide malique, l'acide succinique, l'acide tartrique.

**9.** Composition de revêtement selon l'une quelconque des revendications 1 à 3, 5 à 8, dans laquelle le catalyseur basique est choisi parmi un ou plusieurs du groupe constitué par NaOH, KOH et l'ammoniac.

**10.** Composition de revêtement selon la revendication 8 ou 9, dans laquelle la quantité du catalyseur acide est telle que, lorsque le catalyseur acide est combiné avec la dispersion aqueuse de nanoparticules fonctionnalisées, la valeur de pH de la dispersion n'est pas inférieure à 2, et n'est pas supérieure à 5.

**11.** Kit de la composition à deux composants selon l'une quelconque des revendications 1 à 3, 5 à 10, dans lequel le premier composant et le deuxième composant de la composition à deux composants sont emballés séparément, de sorte que les premier et deuxième composants ne soient pas en contact l'un avec l'autre.

**12.** Utilisation de la composition de revêtement selon l'une quelconque des revendications 1 à 3, 5 à 10 pour former un revêtement sur un substrat qui est de préférence en contact avec un milieu corrosif ; exposé à la corrosion par contact ; exposé au frottement ou à l'usure ; ayant besoin de résistance contre les rayures, ou sur un substrat qui doit être peint et/ou laqué.

**13.** Utilisation selon la revendication 12, dans laquelle la composition de revêtement est utilisée pour former un revêtement de protection sur la surface de dispositifs électroniques grand public, la surface ou l'intérieur de véhicules automobiles, ou la surface de réception de lumière de dispositifs photovoltaïques.

**14.** Utilisation selon la revendication 12 ou 13, dans laquelle le substrat est réalisé en des matériaux choisis parmi la silice, le quartz, le verre, l'aluminium, le cuivre, les aluminosilicates, le mica, le talc, les oxydes métalliques, l'acier, le fer, l'amiante, le nickel, le zinc, le plomb, $CaCO_3$, $CaSO_4$, $BaSO_4$, le graphite et le noir de carbone.

**15.** Utilisation selon l'une quelconque des revendications 12 à 14, dans laquelle le substrat est prétraité avec de l'alcool isopropylique pour obtenir une surface propre du substrat et exposer des groupes de fonctionnalité réactifs sur celle-ci.

FIG. 1

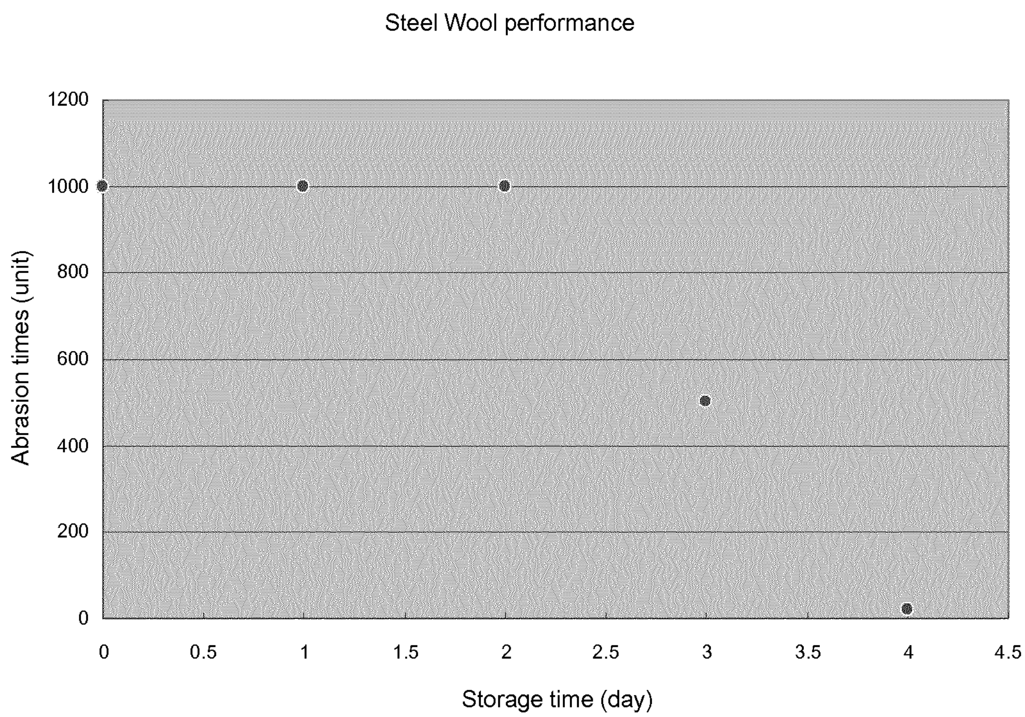
Steel Wool performance
1200
1000
800
600
400
200
0
Abrasion times (unit)
0
0.5
1
1.5
2
2.5
3
3.5
4
4.5
Storage time (day)

FIG. 2

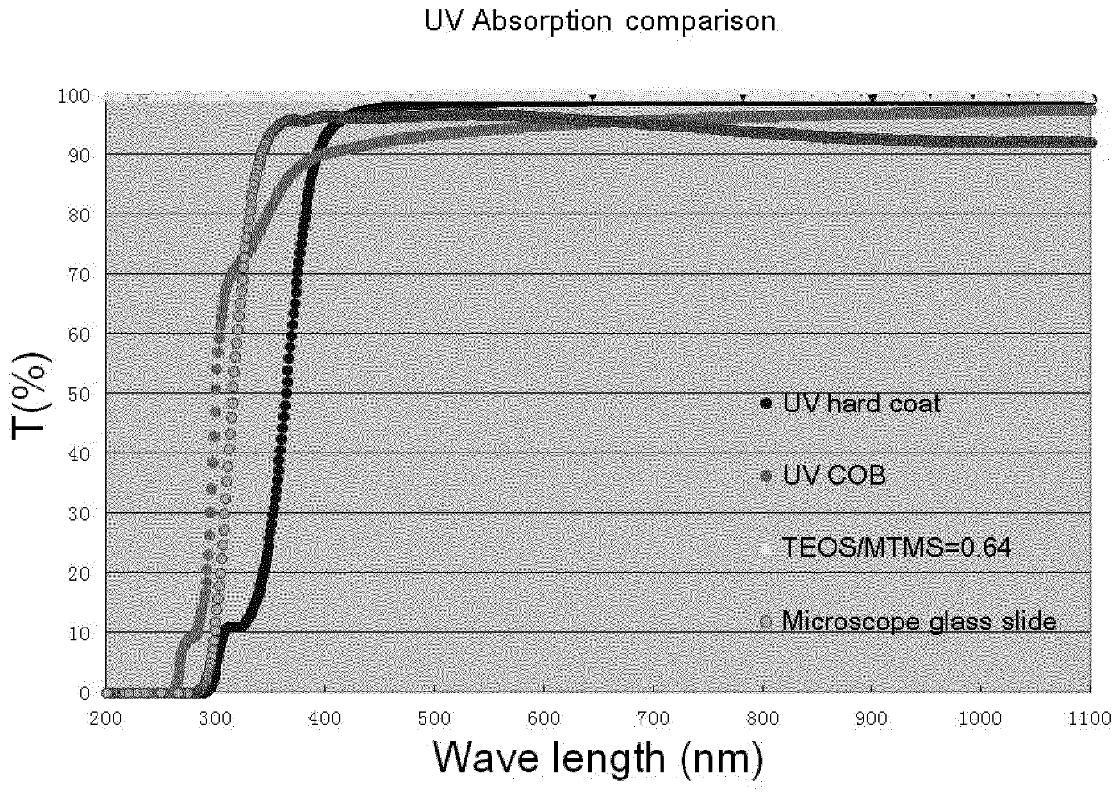
UV Absorption comparison
100
90
80
70
60
50
40
30
20
10
0
T(%)
200
300
400
500
600
700
800
900
1000
1100
Wave length (nm)
UV hard coat
UV COB
TEOS/MTMS=0.64
Microscope glass slide

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2444053 A
- CN 102241939 A
- US 20100143600 A1